(19)

**Europäisches Patentamt**
**European Patent Office**
**Office européen des brevets**

(11) **EP 4 043 162 A1**

(12) **EUROPEAN PATENT APPLICATION**
published in accordance with Art. 153(4) EPC

(43) Date of publication:
**17.08.2022 Bulletin 2022/33**

(21) Application number: **20874606.5**

(22) Date of filing: **29.09.2020**

(51) International Patent Classification (IPC):
**B25J 13/08** (2006.01)    **B25J 15/06** (2006.01)
**B65B 5/08** (2006.01)

(52) Cooperative Patent Classification (CPC):
**B25J 13/08; B25J 15/06; B65B 5/08; B66C 1/02**

(86) International application number:
**PCT/JP2020/036964**

(87) International publication number:
**WO 2021/070683 (15.04.2021 Gazette 2021/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.10.2019 JP 2019185502**

(71) Applicant: **TOPPAN INC.**
**Tokyo 110-0016 (JP)**

(72) Inventors:
• **SAKAI, Fuminori**
  **Tokyo 110-0016 (JP)**
• **SUZUKI, Takashi**
  **Tokyo 110-0016 (JP)**
• **HAMADA, Yoshiaki**
  **Tokyo 110-0016 (JP)**
• **TOMINAGA, Kazuhito**
  **Tokyo 110-0016 (JP)**

(74) Representative: **TBK**
**Bavariaring 4-6**
**80336 München (DE)**

(54) **ARTICLE BOXING SYSTEM**

(57) The present invention provides an article boxing system quickly boxing articles conveyed with a belt conveyor. An article boxing system according to an embodiment, includes: an image processing apparatus (10) detecting edges of an article on the basis of an image of the article captured with a camera, and calculating information relating to a conveyance state of the article; a first robot (R1) including a hand unit (HND) holding the article by adsorbing the article, and an arm (A1, A2) adjusting three-dimensional coordinates of the hand unit (HND) and an inclination of the hand unit with respect to a conveyance direction; and a first controller (CTR1) acquiring the information relating to the conveyance state of the article from the image processing apparatus, acquiring conveyance speed at which the article is conveyed, calculating position coordinates of the article, and, when the article reaches an operation range of the first robot (R1), controlling an operation of the arm (A1, A2) of the first robot (R1) to move the hand unit (HND) in correspondence with the information relating to the conveyance state of the article and cause the hand unit to adsorb the article.

FIG. 1

**EP 4 043 162 A1**

## Description

TECHNICAL FIELD

The invention relates to an article boxing system, in particular, a system to box foods packed in trays.

BACKGROUND ART

Foods, such as harvested vegetables and/or fruits are boxed and shipped in a state of, for example, being subdivided into plastic bags or placed on food trays to be covered with lids or packaging films.

For example, when articles, such as foods packed in food trays, are boxed, it is required to sort the articles as to whether each of them is a defective article, arrange the articles without a space therebetween in styrene foam packing boxes, and perform boxing efficiently. In addition, it is required to perform boxing work carefully without damaging the foods or the packages, and perform boxing work quickly to maintain freshness of the foods.

At present, article boxing work is often performed by manual work. However, as described above, it is required to perform boxing work quickly and carefully. When boxing is performed quickly by manual work, the articles may be arranged unevenly, and the packaging films may be broken when the boxed articles are rearranged forcibly. It requires much labor to continue manual work to box articles in packing boxes carefully and quickly for a long time without boxing them unevenly, and difficulty exists in securing work force to perform work.

Conventional art proposes a fruit boxing apparatus to box fruit by supplying fruit into housing recessed portions (for example, see Patent Literature 1).

CITATION LIST

Patent Literature

Patent Literature 1: Japanese Patent Application Publication No. H6-191507

SUMMARY OF INVENTION

TECHNICAL PROBLEM

The technique disclosed in the literature described above proposes an apparatus supplying and packing spherical fruit into recessed portions in a package provided with a plurality of recessed portions each housing one spherical fruit, and thereafter boxing packages in a packing box.

However, when articles packed in food trays are arranged and housed in a packing box, the articles are preferably arranged without a space therebetween in the packing box. For example, the articles are housed in a state in which the long sides (or short sides) of the food trays are aligned in parallel with a predetermined direction in the packing box. In this case, unlike the case of handling spherical articles, it is required to adjust the position and/or the angle of the arm at the time when the articles are conveyed with a belt conveyor in accordance with the individual articles.

The present invention has been made in consideration of the circumstances described above, and an object of the present invention is to provide an article boxing system to quickly box articles packed in trays.

SOLUTION To PROBLEM

To solve the problem, an article boxing system according to a first aspect of the invention, comprises: an image processing apparatus detecting edges of an article on the basis of an image of the article captured with a camera, and calculating information relating to a conveyance state of the article; a first robot including a hand unit holding the article by adsorbing the article, and an arm adjusting three-dimensional coordinates of the hand unit and an inclination of the hand unit with respect to a conveyance direction; and a first controller acquiring the information relating to the conveyance state of the article from the image processing apparatus, acquiring conveyance speed at which the article is conveyed, calculating position coordinates of the article, and, when the article reaches an operation range of the first robot, controlling an operation of the arm of the first robot to move the hand unit in correspondence with the information relating to the conveyance state of the article and cause the hand unit to adsorb the article.

The article boxing system according to a second aspect of the invention is an article boxing system in the first aspect, wherein the information relating to the conveyance state of the article includes at least one of center coordinates of the article, an inclination of the article with respect to the conveyance direction, and a position of the article.

The article boxing system according to a third aspect of the invention is an article boxing system in the first aspect, wherein the image processing apparatus detects a packed state of the article on the basis of the image.

The article boxing system according to a fourth aspect of the invention is an article boxing system in the first aspect, wherein the hand unit includes at least one adsorption unit including a holding member brought into contact with the article with a space between the holding member and the article, and the adsorption unit adsorbing the article by suction of air in the space.

The article boxing system according to a fifth aspect of the invention is an article boxing system in the fourth aspect, wherein the hand unit includes a support plate including an end portion disposed in a position facing longitudinal edges of the article, with a space between the end portion and the longitudinal edges of the article, when the adsorption unit adsorbs the article.

The article boxing system according to a sixth aspect of the invention is an article boxing system in the first aspect, wherein the first robot further includes a second hand unit holding the article by adsorbing the article, three-dimensional coordinates and an inclination in the conveyance direction of the second hand unit are adjusted with the arm, and the first controller acquires the information relating to the conveyance state of the article from the image processing apparatus, acquires the conveyance speed at which the article is conveyed, calculates the position coordinates of the article, and, when the article reaches the operation range of the first robot, controls an operation of the arm of the first robot to move the hand unit or the second hand unit in correspondence with the information relating to the conveyance state of the article and cause the hand unit or the second hand unit to adsorb the article.

The article boxing system according to a seventh aspect of the invention is an article boxing system in the sixth aspect, wherein the second hand unit includes at least one adsorption unit including a holding member brought into contact with the article with a space between the holding member and the article, the adsorption unit adsorbing the article by suction of air in the space, and the hand unit and the second hand unit are different in position of the holding member in a height direction.

The article boxing system according to an eighth aspect of the invention, further comprises: a second robot including the hand unit and the arm adjusting the three-dimensional coordinates of the hand unit and the inclination of the hand unit with respect to the conveyance direction; and a second controller controlling an operation of the arm of the second robot. The image processing apparatus provides a tag to data of the information relating to the conveyance state of the article, and supplies the data to the first controller. The first controller transfers the received data to the second controller in accordance with a value of the tag. The second controller acquires the information relating to the conveyance state of the article and the conveyance speed from the first controller, calculates the position coordinates of the article, and, when the article reaches an operation range of the second robot, controlling the operation of the arm of the second robot to move the hand unit in correspondence with the information relating to the conveyance state of the article and cause the hand unit to adsorb the article.

ADVANTAGES EFFECTS OF INVENTION

The present invention provides an article boxing system quickly boxing articles conveyed with a belt conveyor.

BRIEF DESCRIPTION OF DRAWINGS

FIG. 1 is a diagram schematically illustrating a configuration example of an article boxing system according to a first embodiment;
FIG. 2 is a diagram for explaining an example of an operation of detecting center coordinates and inclination of the article with an image processing apparatus in the article boxing system according to the first embodiment;
FIG. 3 is a diagram schematically illustrating a configuration example of an illumination apparatus of the article boxing system according to the first embodiment;
FIG. 4 is a diagram schematically illustrating another configuration example of the illumination apparatus of the article boxing system according to the first embodiment;
FIG. 5 is a diagram schematically illustrating configuration examples of adsorption units provided on hand units of a first robot and a second robot of the article boxing system according to the first embodiment;
FIG. 6 is a diagram schematically illustrating a configuration example of support plates provided on the hand units of the first robot and the second robot of the article boxing system according to the first embodiment;
FIG. 7 is a block diagram schematically illustrating a configuration example of a control system of the article boxing system according to the first embodiment;
FIG. 8 is a diagram for explaining an example of an operation of the article boxing system according to the first embodiment;
FIG. 9 is a diagram for explaining an example of an operation of the article boxing system according to the first embodiment;
FIG. 10 is a diagram schematically illustrating a configuration example of an article boxing system according to a second embodiment;
FIG. 11 is a diagram schematically illustrating a configuration example of hand units of a first robot and a second robot of the article boxing system according to the second embodiment;
FIG. 12 is a flowchart for explaining an example of operations of an image processing apparatus of the article boxing system according to the second embodiment;
FIG. 13 is a flowchart for explaining an example of operations of a first controller of the article boxing system according to the second embodiment;
FIG. 14 is a flowchart for explaining an example of operations of a second controller of the article boxing system according to the second embodiment; and
FIG. 15 is a diagram schematically illustrating a configuration example of an article boxing system according to a third embodiment.

DESCRIPTION OF EMBODIMENTS

The following is a detailed explanation of embodiments of the present invention with reference to drawings. It should be noted that the drawings are schematic or conceptual ones, and the dimensions and the ratio and the like of each of the drawings are not necessarily the same as actual ones. In the case where the same part is mutually illustrated in the drawings, the dimensions and/or the ratio of the part may be different between the drawings. In particular, the following embodiments illustrate apparatuses and methods for embodying the technical idea of the present invention, and do not specify the technical idea of the present invention with shapes, structures, and/or arrangements of constituent elements thereof. In the following explanation, elements having the same function and structure are denoted by the same reference numerals, and an overlapping explanation will be made only when necessary.

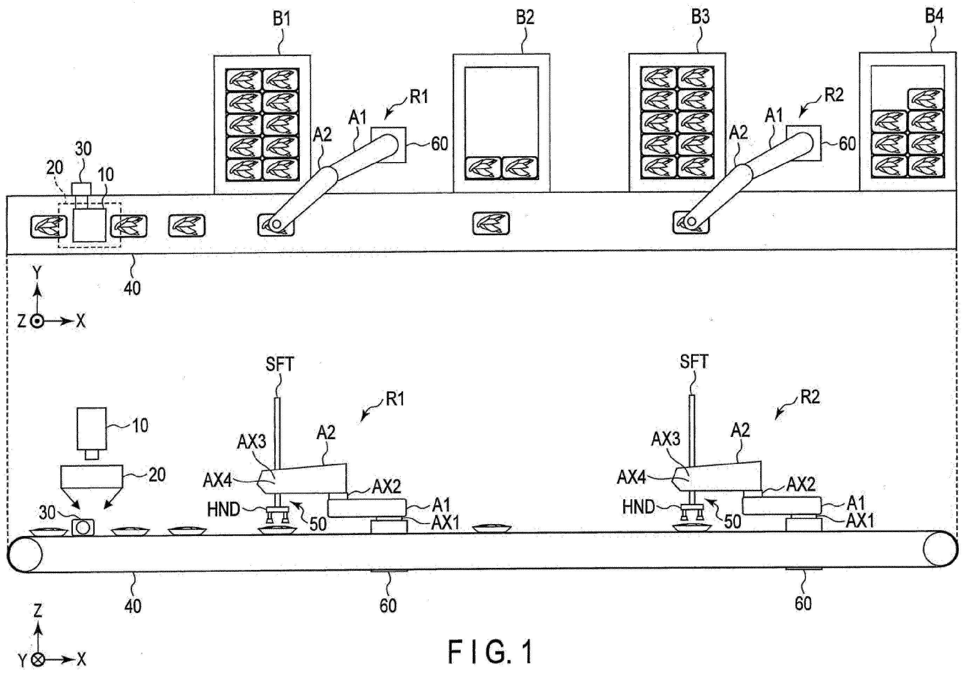

FIG. 1 is a diagram schematically illustrating a configuration example of an article boxing system according to a first embodiment. The article boxing system according to the present embodiment boxes articles in packing boxes B1 to B4. In the present embodiment, articles are supposed to be packages acquired by covering food, such as Japanese ginger, put on food trays with packaging films and providing the packaging films with labels.

The article boxing system according to the present embodiment includes an image processing apparatus 10, an illumination apparatus 20, a conveyance speed detector 30, a belt conveyor 40, a first robot R1, and a second robot R2.

(Belt Conveyor)

The belt conveyor 40 includes a conveying belt conveying articles in a conveyance direction (x direction), and a pair of rotation support members sending the ringshaped conveying belt.

The rotation support members of the belt conveyor 40 are provided on respective ends of the upstream end and the downstream end of the belt conveyor 40. Each of the rotation support members is a columnar (or cylindrical) support member inscribed inside the conveying belt. The rotation axis of each of the rotation support members is substantially parallel with a width direction (y direction) of the conveying belt. When the rotation support members are rotated at the upstream end and the downstream end, the conveying belt is sent in the x direction with columnar surfaces of the rotation support members contacting the conveying belt.

(Conveyance Speed Detector)

The conveyance speed detector 30 is a detector detecting the conveyance speed on the basis of the distance with which the conveying belt is sent in the x direction in unit time, and, for example, an encoder. The conveyance speed detector 30 transmits the detected value to a first controller CTR1 described later.

(Image Processing Apparatus)

The image processing apparatus 10 captures an image of the article supplied onto the conveying belt of the belt conveyor 40, from the upper side of conveying belt of the belt conveyor 40 in the vicinity of the upstream end of the belt conveyor 40.

The image processing apparatus 10 is capable of detecting edges of a food tray of the article from the captured image, and determining whether the packaging film has peeled off (whether the packaging film exists outside the edge of the food tray by a predetermined width or more). When the packaging film is provided with a label, the image processing apparatus 10 is capable of detecting the position of the label from the captured image, and determining whether the shape of the label is abnormal and whether the position of the label is correct (whether the label is abnormal), on the basis of preset information relating to the label.

The image processing apparatus 10 is capable of performing predetermined image processing using the captured image, and calculating information relating to the conveyance state of the article. The information relating to the conveyance state of the article includes, for example, at least one of the center coordinates of the article, the inclination (angle $\Theta$) of the article, and the position (distance D) of the conveying belt at the time when the article is held.

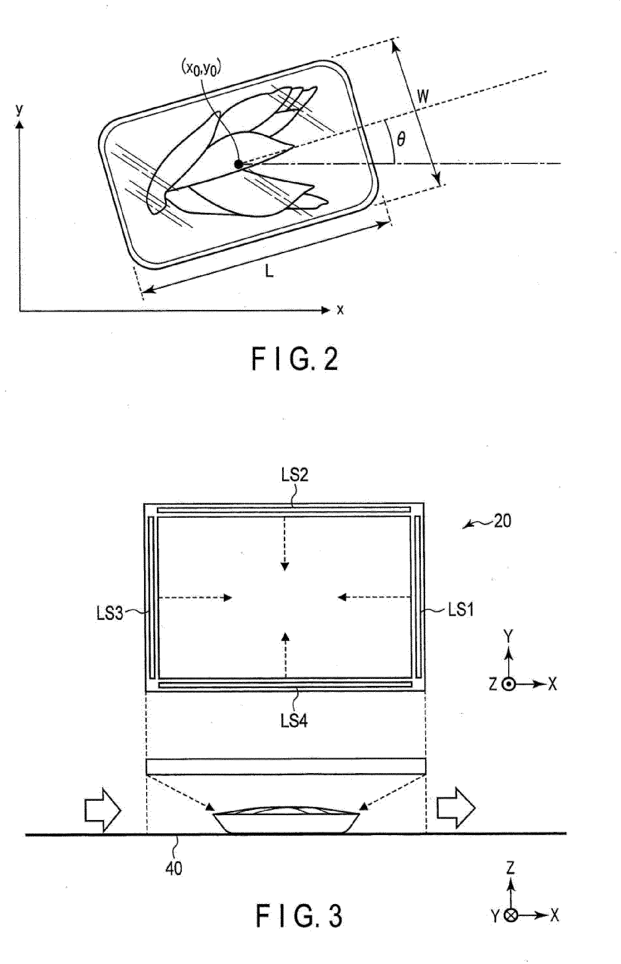

FIG. 2 is a diagram for explaining an example of an operation of detecting the center coordinates and the inclination of the article with the image processing apparatus in the article boxing system according to the first embodiment.

The image processing apparatus 10 detects edges of the food tray of the article using the captured image, and calculates the center coordinates $(x_0, y_0)$ of a substantially rectangular outer shape of the food tray. In this operation, the image processing apparatus 10 calculates coordinates in a plane (two-dimensional) defined with an x axis extending along the conveyance direction (x direction) of the belt conveyor 40 and a y axis extending along the direction (y direction) orthogonal to the x direction, with the coordinates (0, 0) of a preset reference point.

The image processing apparatus 10 is also capable of calculating an angle $\Theta$ made between the longitudinal direction of the food tray and the conveyance direction (x direction) of the belt conveyor 40, on the basis of the detected edges of the food tray of the article.

The image processing apparatus 10 is also capable of calculating a distance D in the x direction from the center coordinates $(x_0, y_0)$ to the position in which the robot R1 or the robot R2 holds the article, on the basis of the calculated center coordinates $(x_0, y_0)$ of the article.

The image processing apparatus 10 can use a preset value as the position (position in the x direction) in which the robot R1 or the robot R2 holds the article.

(Illumination Apparatus)

The illumination apparatus 20 applies light to the article to be imaged with the image processing apparatus 10.

FIG. 3 is a diagram schematically illustrating a configuration example of the illumination apparatus of the article boxing system according to the first embodiment.

The illumination apparatus 20 is disposed, for example, between the imaging lens of the image processing apparatus 10 and the article serving as the imaging target, and includes a housing having a frame shape surrounding the article and linear light sources LS1 to LS4 arranged along respective sides of the housing.

The shape of the housing of the illumination apparatus 20 may be determined in accordance with the shape of the articles serving as the imaging target. In the present embodiment, the outer shape of the article serving as the imaging target of the imaging processing apparatus 10 is a substantially rectangular shape as viewed from the z direction, and the housing of the illumination apparatus 20 is formed in a substantially rectangular frame shape. In addition, the housing of the illumination apparatus 20 is disposed at a predetermined distance from the article such that the article serving as the imaging target is placed inside a range of the housing of the illumination apparatus 20 as viewed from the image processing apparatus 10. The housing of the illumination apparatus 20 may include a reflection unit reflecting the light emitted from the linear light sources LS1 to LS4 in predetermined directions.

Each of the linear light sources LS1 to LS4 includes, for example, a plurality of LEDs (light emitting diodes), and their arrangement positions and their light emitting directions are adjusted to illuminate edges of the food tray of the article serving as the imaging target. For example, the linear light sources LS1 and LS3 apply light to the transverse edges of the food tray, and the linear light sources LS2 and LS4 apply light to the longitudinal edges of the food tray. The transverse direction of the food tray is the transverse direction of the substantially rectangular food tray in the image acquired by capturing the food tray with the image processing apparatus 10. The longitudinal direction of the food tray is the longitudinal direction of the substantially rectangular food tray in the image acquired by capturing the food tray with the image processing apparatus 10.

For example, when the food tray is disposed on the belt conveyor 40 and light is applied to the food tray and parts around the food tray from the upper side of the food tray, there are cases where the light is reflected in the conveying belt of the belt conveyor 40 and/or the packaging film provided on the food tray and the edges of the food tray cannot be detected with the image processing apparatus 10. For this reason, in the present embodiment, light is applied to edges of the food tray in the horizontal direction (direction parallel with the x-y plane) at the height of the edges of the food tray to enable detection of an image of the edges of the food tray with high accuracy with the image processing apparatus 10.

However, when the linear light sources L1 to L4 are arranged at the same height as that of the edges of the food tray, the illumination apparatus 20 collides with the articles conveyed on the belt conveyor 40. For this reason, the position of the illumination apparatus 20 is adjusted such that the illumination apparatus 20 applies light from a diagonally upper part to the edges of the food tray on the image processing apparatus 10 side beyond the region in which the conveyed article is moved.

As described above, by applying light to the edges of the food tray of the article with the illumination apparatus 20, edges of the food tray can be easily detected with an image captured with the image processing apparatus 10.

In the example illustrated in FIG. 3, the illumination apparatus 20 includes four linear light sources LS1 to LS4, but the number and/or the shape of light sources may be set in accordance with the environment in which the boxing system is installed and/or the shape of the articles serving as the imaging targets of the image processing apparatus 10 and the like. For example, the illumination apparatus 20 may include only linear light sources applying light to long sides (or short sides) of the articles serving as the imaging targets and conveyed to the imaging position, or may include point light sources applying light to positions in which edges of the food tray of the article serving as the imaging target cross. As another example, when the image processing apparatus 10 can image a sufficiently clear image, the illumination apparatus 20 may be omitted.

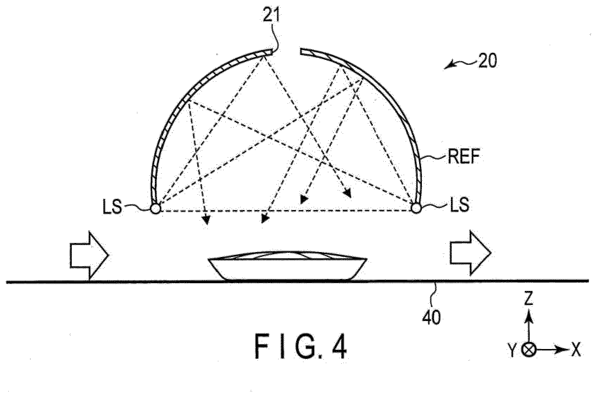

FIG. 4 is a diagram schematically illustrating another configuration example of the illumination apparatus of the article boxing system according to the first embodiment. In this example, the illumination apparatus 20 includes a reflector REF and a light source LS emitting light toward the inner surface of the reflector REF.

FIG. 3 illustrates the configuration example of the illumination apparatus 20 enabling image detection of edges with high accuracy in the case where the edges of the food tray cannot be detected with the image processing apparatus 10 because light is reflected with the conveying belt of the belt conveyor 40 and/or the packaging film provided on the food tray when light is applied to the food tray and/or parts around the food tray from the upper side of the food tray, but the structure of the illumination apparatus 20 is not limited thereto.

This example illustrates an example of the structure of the illumination apparatus 20 applying light to the article and parts around the article from the upper side of the article. With certain shapes of the article, characteristics of the packaging member, characteristics of the conveying belt, and/or the environment in which the system is installed, an image of the edges can be detected with higher accuracy by applying light from the upper side of the article.

The reflector REF includes an opening 21 in which an imaging lens of the image processing apparatus 10 is to be inserted, and includes a substantially hemispherical inner surface connecting the opening 21 and a circular edge surrounding the article serving as the imaging target. The reflector REF is disposed such that the position of the edge thereof on the article side is disposed on the image processing apparatus 10 side beyond the region in which the article serving as the imaging target is moved.

The light source LS includes, for example, a plurality of LEDs arranged side by side at the edge on the article side of the reflector REF, and the light emitting direction thereof is adjusted to emit light toward the hemispherical inner surface of the reflector REF. The light applied from the light source LS to the inner surface of the reflector REF is reflected with the reflector REF, and applied to the article serving as the imaging target mainly from above. This structure enables imaging of a clear image of the article serving as the imaging target with the image processing apparatus 10.

In the example illustrated in FIG. 4, the illumination apparatus 20 includes the light source LS including a plurality of LEDs arranged side by side at the circular edge of the reflector REF, but the number of LEDs of the light source and/or the shape of the reflector REF may be set in accordance with the environment in which the boxing system is installed and/or the shape of the articles serving as the imaging targets of the image processing apparatus 10. As another example, when the image processing apparatus 10 can image a sufficiently clear image, the illumination apparatus 20 may be omitted.

(First Robot and Second Robot)

The first robot R1 and the second robot R2 have the same structure. Each of the first robot R1 and the second robot R2 includes a base 60, a first arm A1, a second arm A2, a first shaft AX1, a second shaft AX2, a third shaft AX3, a fourth shaft AX4, and a hand adjustment unit 50.

The base 60 supports the first arm A1 and the second arm A2. Each of the first robot R1 and the second robot R2 is fixed on the base 60 such that the position of the robot is not shifted when the first arm A1 and the second arm A2 operate.

The first AX1 is disposed on the base 60, and includes a rotation axis extending in the z direction.

The first arm A1 is a link of the robot connecting the first shaft AX1 and the second shaft AX2. The first arm AX1 is disposed to extend substantially parallel with the x-y plane between the position of the first shaft AX1 in the x-y plane and the position of the second shaft AX2 in the x-y plane. One end of the first arm AX1 is disposed on the first shaft AX1, and the second shaft AX2 is disposed on the other end of the first arm A1. The position of the first arm A1 is controlled according to the rotation angle of the first shaft AX1. The second shaft AX includes a rotation axis extending in the z direction.

The second arm A2 is a link of the robot connecting the second shaft AX2 and the third shaft AX3 and connecting the second shaft AX2 and the fourth shaft AX4. The second arm A2 is disposed to extend substantially parallel with the x-y plane between the position of the second shaft AX2 in the x-y plane and the position of the third shaft AX3 (or the fourth shaft AX4) in the x-y plane. One end of the second arm AX2 is disposed on the second shaft AX2, and a shaft SFT extending in the z direction is held on the other end of the second arm A2. The position of the second arm A2 is controlled according to the rotation angles of the first shaft AX1 and the second shaft AX2.

The third shaft AX3 includes a cylindrical shaft extending in, for example, a direction substantially parallel with the x-y plane, and moves the shaft SFT in the z direction by contacting the shaft SFT held at the other end of the second arm A2.

The fourth shaft AX4 includes a cylindrical shaft extending in, for example, the z direction, and rotates the shaft SFT around the rotation axis extending in the z direction by contacting the shaft SFT held at the other end of the second arm A2.

The hand adjustment unit 50 includes the shaft SFT movable in the z direction with the third shaft AX3 and rotatable around the rotation axis extending in the z direction with the fourth shaft AX4, and a hand unit HND fixed at one end of the shaft SFT.

The arms A1 and A2 and the hand adjustment unit 50 enable holding of the article by controlling the three-dimensional position coordinates and the inclination with respect to the conveyance direction of the hand unit HND with the positions and the rotation angles of the first to the fourth shafts AX1 to AX4 and the shaft SFT, pressing adsorption units 500 of the hand unit HND against predetermined positions of the article, and absorbing the article. In the present embodiment, the hand unit HND includes two adsorption units 500.

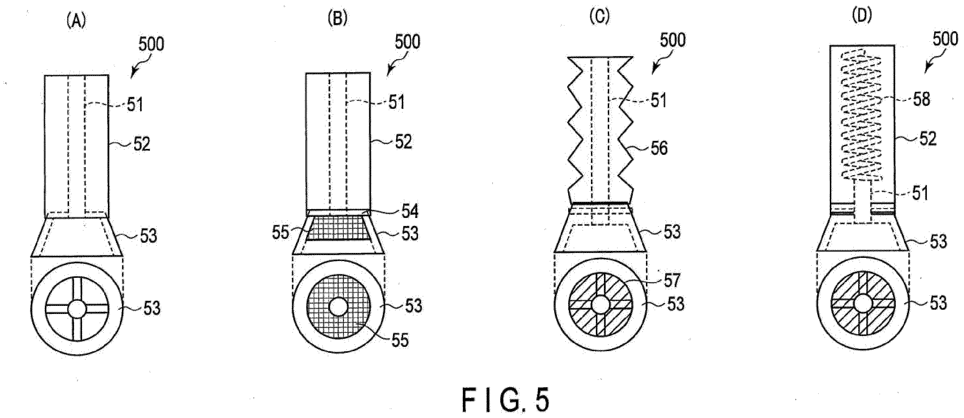

FIG. 5 is a diagram schematically illustrating configuration examples of adsorption units provided on the hand units of the first robot and the second robot of the article boxing system according to the first embodiment.

FIG. 5 schematically illustrates four configuration examples (A) to (D) of the adsorption units 500. A proper structure can be selected as the structure of the adsorption units 500 in consideration of the material and the shape of the adsorbed parts of the articles, the weight of the articles, and/or the suction pressure and the like, and the structure is not limited to the structure illustrated in FIG. 5.

The adsorption unit 500 illustrated in FIG. 5 (A) includes a suction tube 51, a SUS tube 52, and a holding member 53.

The holding member 53 is a part pressed against the article serving as the holding target, and formed of, for example, rubber. The holding part 53 has a substantially tubular shape including an opening covered with one end of the SUS tube 52 provided with an opening in which the suction tube 51 is inserted, and an opening pressed against the adsorbed part of the article. In the state in which the holding part 53 is pressed against the article, because it is required to seal a space enclosed with the suction tube 51, the holding member 53, and the article, the holding member 53 is formed of a material capable of being brought into close contact with the adsorbed part of the article.

The suction tube 51 is connected with the space enclosed with the holding member 53 and the article, when the holding member 53 is pressed against the article. With a suction device (not illustrated) connected with the suction tube 51, the air is sucked from the space enclosed with the holding member 53 and the article. In this manner, the article can be adsorbed with the holding member 53.

The SUS tube 52 contains the suction tube 51 inside, and is attached to one opening of the holding member 53 at an end portion including an opening in which one end of the suction tube 51 is inserted. The SUS tube 52 suppresses impact on the article at the time when the holding member 53 is pressed against the article.

The adsorption unit 500 illustrated in FIG. 5 (B) further includes a buffer 55 and a suction preventing guide 54.

For example, when the adsorbed part of the article is a thin packaging film and the suction force of the suction tube 51 is strong, an adsorption mark may be left on the packaging film, or the packaging film may be stretched and damaged. For this reason, in the example illustrated in FIG. 5 (B), the buffer 55 and the suction preventing guide 54 are attached to prevent the packaging film from being drawn into the adsorption unit 500.

The buffer 55 is disposed inside the holding member 53, and provided with an opening continuing to the suction tube 51. The buffer 55 is formed of a porous material, such as sponge and fabric, not to obstruct suction with the suction tube 51.

The suction preventing guide 54 is provided at the end portion of the SUS tube 52, and closes the opening of the holding member 53 to prevent part of the article from being drawn into the SUS tube 52 side through the holding member 53. The suction preventing guide 54 is formed of a hard material, such as plastic.

The adsorption unit 500 illustrated in FIG. 5 (C) includes a bellows-shaped tube 56 instead of the SUS tube 52, and includes a holding member 53 covering a part between the suction tube 51 and the bellows-shaped tube 56 with rubber. The whole surface of the part of the holding member 53 contacting the article when the holding member 53 is pressed against the article is formed of rubber.

The adsorption unit 500 described above enables suppression of impact on the article with the bellows-shaped tube 56 when the holding member 53 is pressed against the article. In addition, because the whole inner surface of the holding member 53 is formed of rubber, the adsorption unit 500 is capable of avoiding the phenomenon of damage to the article due to abutment of the holding member 53.

The adsorption unit 500 illustrated in FIG. 5 (D) includes a spring-type buffer 58 and the holding member 53 illustrated in FIG. 5 (C).

The buffer 58 is, for example, a coil spring, and contains the suction tube 51 inside. The buffer 58 enables suppression of impact on the article when the holding member 53 is pressed against the article.

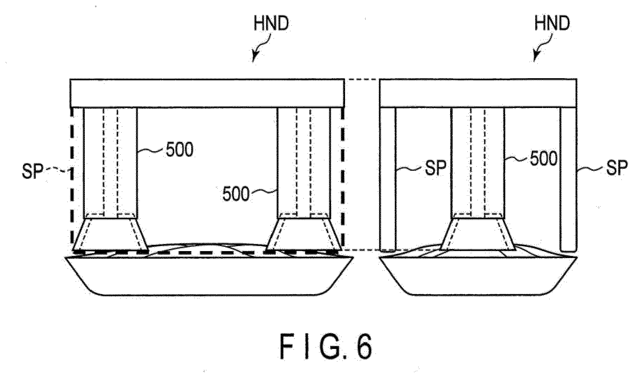

FIG. 6 is a diagram schematically illustrating a configuration example of support plates provided on the hand units of the first robot and the second robot of the article boxing system according to the first embodiment.

In the article boxing system according to the present embodiment, the hand unit HND includes two support plates SP. The support plates SP are arranged on both sides of the two adsorption units 500 in substantially parallel with the direction (longitudinal direction of the held article) in which the two adsorption units 500 are arranged and the z direction. The longitudinal width of the support plates SP is smaller than the longitudinal width of the article. The width of the transverse direction (z direction) of the support plates SP is a width with which the longitudinal end of the support plate SP is opposed to the longitudinal edge of the food package of the article with an interval and does not collide with the longitudinal edge when the hand unit HND adsorbs the article. In addition, the arrangement positions of the support plates SP are adjusted such that they are not arranged outside the transverse width of the food package of the article when the hand unit HND adsorbs the article.

Specifically, the outer shape of the hand unit HND is formed to fall inside the outer shape of the article when the hand unit HND and the article are viewed in a direction perpendicular to the x-y plane, in the state in which the hand unit HND adsorbs the article. Because the support plates SP are not arranged outside the outer shape of the article, the support plates SP are prevented from colliding with part of the box and/or the other articles when the articles are boxed in the packing boxes B1 to B4, and the articles can be arranged without a space therebetween in the packing boxes B1 to B4.

In the present embodiment, the adsorption units 500 of the hand unit HND are arranged to adsorb parts of the article in the vicinity of the end portions in the longitudinal direction of the article. This structure suppresses rotation of the article around the transverse axis when the article is adsorbed with the hand unit HND. In addition, because the hand unit HND includes the support plates SP, rotation of the article around the longitudinal axis is suppressed. This structure prevents unstableness of the article even when the article is moved by rotation of the arms A1 and A2 in the state in which the article is adsorbed with the hand unit HND, and the articles can be smoothly boxed without instability of the articles.

The present embodiment has the structure in which the hand unit HND includes two adsorption units 500 arranged in the longitudinal direction of the article and the hand unit HND holds the article by adsorbing substantially central parts in the transverse direction of the article and in the vicinity of both end portions in the longitudinal direction of the article, but the structure is not limited thereto. It suffices that the hand unit HND includes at least one adsorption unit 500. As another example, the hand unit HND may include three or more adsorption units 500. The positions at which the adsorption units 500 adsorb the article can be set in accordance with the shape of the article and/or the material of the adsorbed part. The support plates SP may be omitted when the article can be sufficiently stably held by adsorption with the adsorption units 500.

(Control Block)

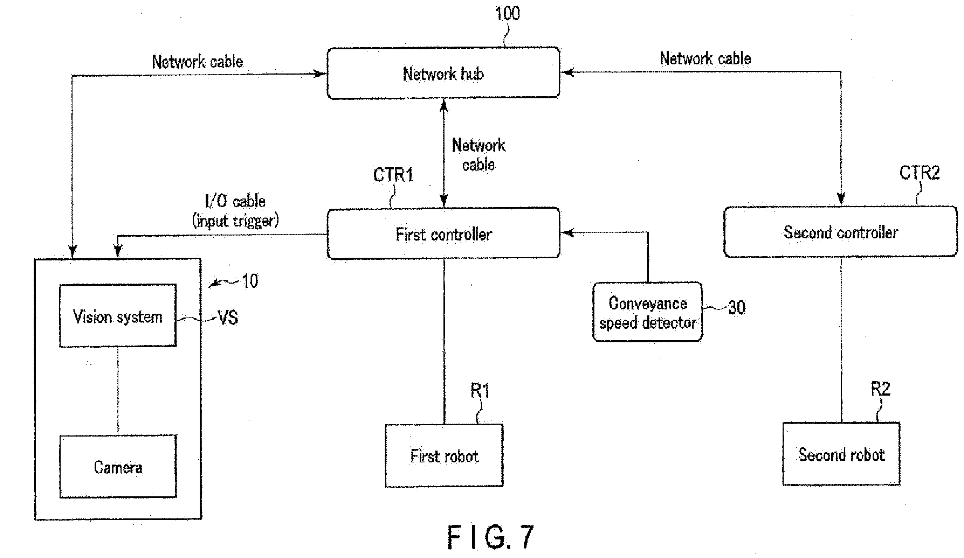

FIG. 7 is a block diagram schematically illustrating a configuration example of a control system of the article boxing system according to the first embodiment.

The article boxing system according to the present embodiment includes a first controller CTR1 controlling operations of the first robot R1, a second controller CTR2 controlling operation of the second robot R2, a vision system VS performing image processing, and a network hub 100.

The first controller CTR1 is a master controller performing various arithmetic operations to control the first robot R1 and the second robot R2 using information acquired from the image processing apparatus 10 and the conveyance speed detector 30. The first controller CTR1 includes at least one processor, such as a CPU (central processing unit) and a MPU (micro processing unit), and a memory storing a program to be executed with the processor.

The second controller CTR2 is a slave controller controlling the second robot R2 in accordance with information acquired from the first controller CTR1. The second controller CTR2 includes at least one processor, such as a CPU and a MPU, and a memory storing a program to be executed with the processor.

The vision system VS detects edges of the article and/or the shape of the label using data of the image captured with the camera, and calculates the center coordinates and the inclination of the article and the position of the article on the belt conveyor. The vision system VS includes at least one processor, such as a CPU and a MPU, and a memory storing a program to be executed with the processor.

The network hub 100 is connected to the first controller CTR1, the second controller CTR2, and the vision system VS via network cables, such as Ethernet (registered trademark) cables. The first controller CTR1, the second controller CTR2, and the vision system VS are capable of communicating with each other via the network hub 100.

The control block of the article boxing system according to the present embodiment is not limited to the structure described above. For example, the first controller CTR1, the second controller CTR2, and the vision system VS may be connected to be capable of communicating with each other, without via the network hub 100. When the first controller CTR1, the second controller CTR2, and the vision system VS can communicate with each other in a wireless manner, the network cables can be omitted.

The first controller CTR1 and the second controller CTR2 do not necessarily have master-slave relation, but may have the structure of performing equal control. For example, the article boxing system may include a system controller performing cooperative control on the whole system, and operations of the first controller CTR1, the second controller CTR2, and the vision system VS can be controlled with the system controller.

(Article Boxing Operation)

The following is an explanation of an example of operations of the article boxing system according to the first embodiment. This explanation illustrates an example of an operation of boxing the article with the first controller CTR controlling the first robot R1.

When the articles are supplied to the upstream end of the belt conveyor 40, the articles are conveyed in the x direction by an operation of the belt conveyor 40.

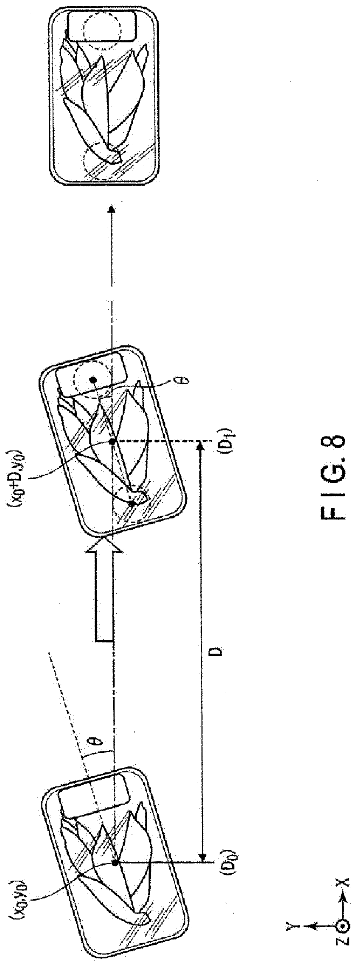

FIG. 8 is a diagram for explaining an example of an operation of the article boxing system according to the first embodiment.

The vision system VS of the image processing apparatus 10 acquires data of an image captured with the camera when the article is conveyed to a predetermined position of the belt conveyor 40, and determines whether any abnormality exists in the packaging film and/or the label of the article. The vision system VS also calculates the center coordinates $(x_0, y_0)$ and the inclination $\Theta$ of the article from the acquired image data. The image processing apparatus 10 supplies the first controller CTR with data $(x_0, y_0, \Theta)$ of the acquired values for the article determined as an article having no abnormalities in the packaging film and/or the label.

The first controller CTR1 receives data of the center coordinates $(x_0, y_0)$ and the inclination $\Theta$ of the article from the image processing apparatus 10, acquires the conveyance speed of the belt conveyor 40 detected with the conveyance speed detector 30, and determines whether the target article has reached an operation range D1 of the first robot R1. The first controller CTR1 controls the first arm A1, the second arm A2, and the shaft SFT to move the positions of the first arm A1, the second arm A2, and the shaft SFT such that the hand unit HND is in a state of being rotated by the inclination $\Theta$ with respect to the x direction at the coordinates ($x_o$+D, $y_o$, $z_0$) at the timing at which, for example, the target article has reached the operation range D1 of the first robot R1, to hold the article by vacuum adsorption.

The operation range D1 of the first robot R1 may be set to different ranges according to the form of the arm is a right arm form or a left arm form. In the present embodiment, the first robot R1 is set with the front surface facing the belt conveyor 40 side. When the arm form of the first robot R1 is a right arm form, the first robot R1 operates the arm A1 and the arm A2 in a movable range corresponding to a human right arm. When the arm form of the first robot R1 is a left arm form, the first robot R1 operates the arm A1 and the arm A2 in a movable range corresponding to a human left arm. The coordinate $z_o$ in the z direction is a z-direction coordinate value of the position in which the article is adsorbed with the adsorption units 500, and a preset value may be used as the coordinate $z_0$.

In this operation, for example, the first controller CTR1 uses coordinates of the intermediate point of the centers of the adsorbing surfaces of the two adsorption units 500 as the coordinates ($x_o$+D, $y_o$, $z_0$), and controls the operation of the first robot R1 such that an angle made between a line connecting the centers of the adsorbing surfaces of the two adsorption units 500 and the x direction is equal to the inclination $\Theta$.

The value "D" in the coordinates ($x_o$+D, $y_o$, $z_0$) described above can be calculated with, for example, the first controller CTR1. The value "D" is a difference between the x coordinate $x_0$ of the center of the article initially subjected to image processing and the x coordinate of the intermediate point of the centers of the adsorbing surfaces of the two adsorption units 500 of the hand unit HND of the first robot R1 on standby. Because the conveying belt of the belt conveyor 40 is always moving even while the first robot R1 is moving, the value D changes (increases) also while the first robot R1 is performing an adsorbing operation. For this reason, the first robot R1 lifts the article up with the adsorption units 500 while continuously following increase of D. After adsorption, the hand unit HND is promptly rotated by $-\Theta$ to remove the inclination of the food pack such that the longitudinal direction of the article is substantially parallel with the x direction.

The first controller CTR1 is capable of calculating the time from the current time to the time at which the center coordinates of the article are coordinates ($x_0$+D, $y_0$), on the basis of, for example, data of the conveyance speed of the belt conveyor 40 and the center coordinates ($x_0$, $y_o$) of the article.

Thereafter, the first robot R1 boxes the held article to a predetermined position in the packing box B1 or B2.

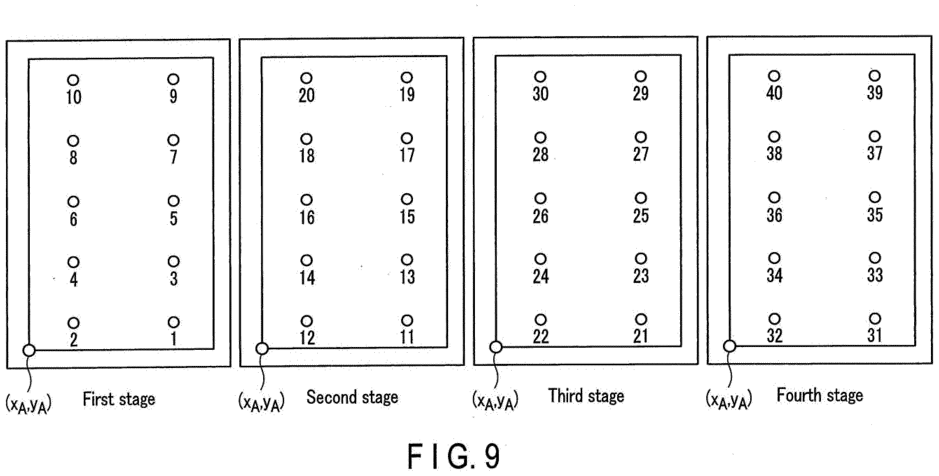

FIG. 9 is a diagram for explaining an example of an operation of the article boxing system according to the first embodiment. The coordinates of the place to which the first robot R1 carries the held article are calculated, for example, as follows.

$$x = x_A + \{l - (1/2) \ L\}$$

$$y = y_A + \{m - (1/2) \ W\}$$

$$z = z_A + (n+1) \ H$$

where "l = 1, 2, m = 1, 2, 3, 4, 5, n = 1, 2, 3, 4" are satisfied. The coordinates ($x_A$, $y_A$, $z_A$) are coordinates at the lower left point (point at which the values of the x coordinate, the y coordinate, and the z coordinate are minimum) in the bottom surface inside the packing box B1 or B2. Specifically, l indicates the number of rows of the articles arranged in the x direction, m indicates the number of columns of the articles arranged in the y direction, and n indicates the number of stages of the articles stacked in the z direction.

L indicates a longitudinal width of the article, W indicates a transverse width of the article, and H indicates a width in the thickness direction (z direction) of the article. For example, the outer shapes of articles acquired by packing food, such as vegetables, placed on food trays have individual differences, but the longitudinal width L, the transverse width W, and the width H in the thickness direction can be set to preset values to fall within predetermined ranges in accordance with the capacity of the packing boxes B1 and B2.

The first robot R1 successively boxes the articles in order from the position having the smaller y coordinate and the smaller z coordinate and the larger x coordinate in the packing box B1 or B2, by releasing adsorption with the adsorption units 500 after moving each of the articles, as illustrated in FIG. 8. After boxing of the articles in one of the packing boxes B1 and B2 is finished, the first robot R1 starts boxing in the other of packing boxes B1 and B2. The finished packing box is exchanged with an empty box while the first robot R1 is boxing articles in the other packing box.

For example, in the example illustrated in FIG. 1, the belt conveyor 40 conveys articles from the right to the left in front of the first robot R1, the packing box B1 is disposed on the right side of the first robot R1, and the packing box B2 is disposed on the left side thereof. In this state, the first robot R1 performs an operation corresponding to a human left arm (the arm form is a left arm form) with the arm A1 and the arm A2 when performing boxing in the packing box B1, and the first robot R1 performs an operation corresponding to a human right arm (the arm form is a right arm form) with the arm A1 and the arm A2 when performing boxing in the packing box B2.

The work allotments of boxing with the first robot R1 and the second robot R2 are, for example, alternately tagged to data subjected to image processing with the vision system VS, and the first controller CTR1 performs sorting according to the tags.

As described above, the article boxing system according to the present embodiment enables successive holding of articles conveyed with the belt conveyor 40 in accordance with the positions and the inclinations thereof, and boxing the articles in packing boxes.

Specifically, the present embodiment provides an article boxing system quickly boxing articles conveyed with a belt conveyor.

(Second Embodiment)

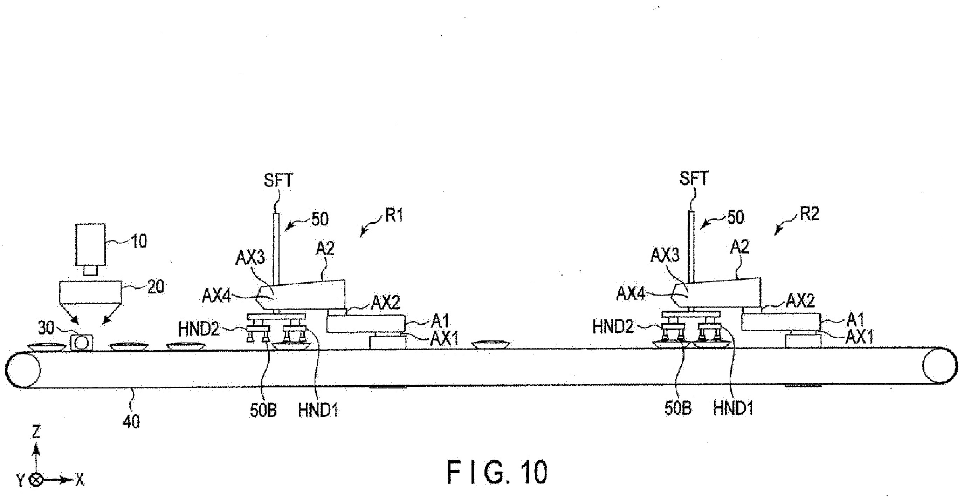

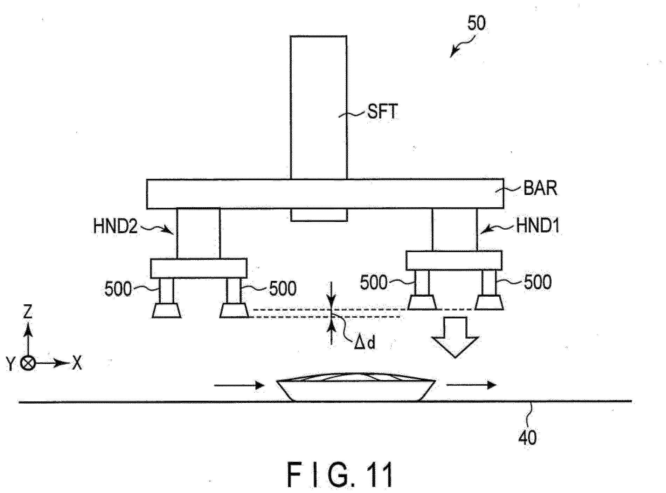

The following is a detailed explanation of an article boxing system according to a second embodiment with reference to drawings. FIG. 10 is a diagram schematically illustrating a configuration example of an article boxing system according to a second embodiment. FIG. 11 is a diagram schematically illustrating a configuration example of hand units of a first robot and a second robot of the article boxing system according to the second embodiment.

The article boxing system according to the present embodiment is different from the first embodiment described above, in that each of the hand adjustment units 50 of the first robot R1 and the second robot R2 includes a first hand unit HND1 and a second hand unit HND2.

Each of the hand adjustment units 50 includes a shaft SFT, a horizontal bar BAR, and a first hand unit HND1 and a second hand unit HND2.

The horizontal bar BAR is fixed at an end portion of the shaft SFT to extend in a direction orthogonal to a direction (z direction) in which the shaft SFT extends.

The horizontal bar BAR is fixed on the shaft SFT at a central portion in the longitudinal direction.

The first hand unit HND1 and the second hand unit HND2 are fixed at respective ends of the horizontal bar BAR. The direction in which the longitudinal direction of the horizontal bar BAR extends is substantially parallel with a direction in which adsorption units 500 of the first hand unit HND1 and the second hand unit HND2 are arranged. Specifically, an angle made between the direction in which the adsorption units 500 are arranged and the x direction can be adjusted by rotating the shaft SFT around a z-direction rotation axis.

The first hand unit HND1 and the second hand unit HND2 are different in positions of article-abutting surfaces of the adsorption units in the z direction. For example, in the example illustrated in FIG. 11, the adsorbing position of the first hand unit HND1 is disposed to be shifted upward (direction of going away from the conveyance path) by Δd from the adsorbing position of the second hand unit HND2. In the present embodiment, an article is held with the first hand unit HND1, and another article is held with the second hand unit HND2 in a state in which the former article is kept held with the first hand unit HND1. For example, in the case where the article-abutting surfaces of the adsorption units of the first hand unit HND1 and the second hand unit HND2 are arranged at the same position in the z direction, when the second hand unit HND2 is going to hold an article, the article having already been held with the first hand unit HND1 may contact the conveying belt and holding of the article with the first hand unit HND1 may be released. For this reason, the adsorbing position of the first hand unit HND1 is disposed to be shifted upward (direction of going away from the conveyance path) by Δd from the adsorbing position of the second hand unit HND2. This structure prevents the article held with the first hand unit HND1 from contacting the conveying belt, when another article is held with the second hand unit HND2 in a state in which the former article is held with the first hand unit HND1.

The other parts of the article boxing system according to the present embodiment are the same as those of the first embodiment described above, except the structure of the hand adjustment units 50 described above.

(Article Boxing Operation)

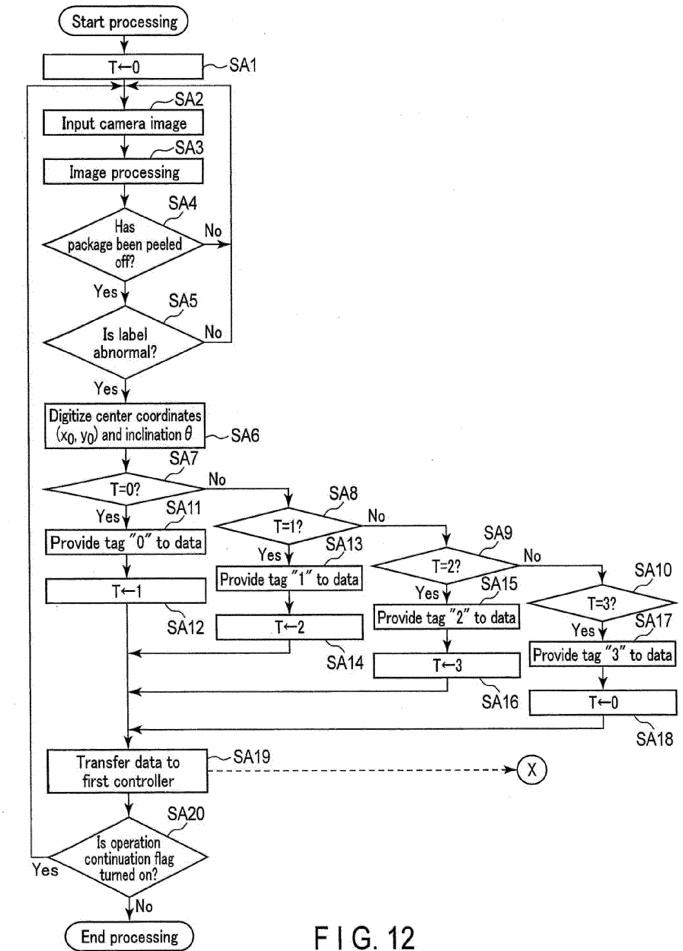

FIG. 12 is a flowchart for explaining an example of operations of an image processing apparatus of the article boxing system according to the second embodiment. In the explanation of FIG. 12, T is a tag to allot the article to one of the first robot R1 and the second robot R2 to hold the article. For example, an article provided with a tag T of 0 or 1 is held with the first robot R1, and an article provided with a tag T of 2 or 3 is held with the second robot R2.

When articles are successively supplied onto the conveying belt from the upstream end of the belt conveyor 40, an image of each of the articles is captured with the camera of the image processing apparatus 10.

First, the vision system VS set the value of T to 0 (Step SA1), and receives data of the image captured with the camera (Step SA2).

Thereafter, the vision system VS performs image processing to detect edges of the food tray of the article and the shape of the label from data of the received image (Step SA3).

The vision system VS determines whether the packaging film has peeled off by comparing the detected edges of the food tray and the image (Step SA4). When it is determined that the packaging film has peeled off, the vision system VS regards the article being processed as a defective article, remove the article from the boxing target, and starts processing of the next article (return to Step SA2).

When it is determined that the packaging film has not peeled off, the vision system VS determines whether the label is abnormal, on the basis of the detected shape of the label (Step SA5). For example, the vision system VS determines whether the detected shape of the label is a preset shape, and whether the position to which the label is attached is a preset position with respect to the positions of the edges of the food tray. When the shape and/or the position of the label are not the preset shape and/or position, the vision system determines that the label is abnormal. When it is determined that the label is abnormal, the vision system VS regards the article being processed as a defective article, remove the article from the boxing target, and starts processing of the next article (return to Step SA2).

When it is determined that the label is not abnormal, the vision system VS calculates the center coordinates $(x_0, y_0)$, the inclination $\Theta$, and the position $D_0$ of the article, and digitize them (Step SA6).

Thereafter, the vision system VS determines whether the value of T is 0 (Step SA7). When the value of T is not 0, the vision system VS determines whether the value of T is 1 (Step SA8). When the value of T is neither 0 nor 1, the vision system VS determines whether the value of T is 2 (Step SA9). When the value of T is none of 0, 1, and 2, the vision system VS determines whether the value of T is 3 (Step SA10).

When it is determined that the value of T is 0 at Step SA7, the vision system VS provides a tag "0" to data of the center coordinates $(x_0, y_0)$, the inclination $\Theta$, and the position $D_0$ of the article (Step SA11), and sets T to 1 (Step SA12).

When it is determined that the value of T is 1 at Step SA8, the vision system VS provides a tag "1" to data of the center coordinates $(x_0, y_0)$, the inclination $\Theta$, and the position $D_0$ of the article (Step SA13), and sets T to 2 (Step SA14).

When it is determined that the value of T is 2 at Step SA9, the vision system VS provides a tag "2" to data of the center coordinates $(x_0, y_0)$, the inclination $\Theta$, and the position $D_0$ of the article (Step SA15), and sets T to 3 (Step SA16).

When it is determined that the value of T is 3 at Step SA10, the vision system VS provides a tag "3" to data of the center coordinates $(x_0, y_0)$, the inclination $\Theta$, and the position $D_0$ of the article (Step SA17), and sets T to 0 (Step SA18).

Thereafter, the vision system VS transfers the data as described above to the first controller CTR1 (Step SA19).

The vision system VS determines whether an operation continuation flag turned on (ON) with an operation continuation instruction supplied from, for example, the first controller CTR1 is in an ON state (Step SA20), and repeatedly performs Steps SA2 to SA19 described above while the operation continuation flag is in the ON state.

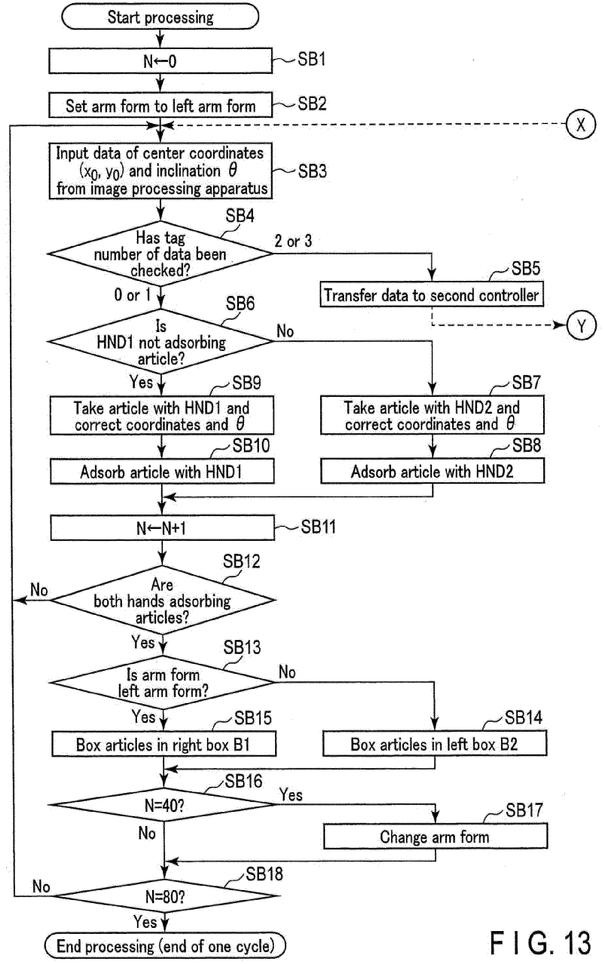

FIG. 13 is a flowchart for explaining an example of operations of the first controller of the article boxing system according to the second embodiment. In the following explanation, N and N' indicate values used for counting the numbers of articles boxed with the first robot R1 and the second robot R2. This explanation illustrates operations of boxing 40 articles in a packing box with each of the first robot R1 and the second robot R2, as an example.

When processing is started, first the first controller CTR1 sets N to 0 (Step SB1), and sets the arm form of the first robot R1 as a left arm form (Step SB2).

The first controller CTR1 waits for data from the vision system VS. When the first controller CTR1 receives data of the center coordinates $(x_0, y_0)$, the inclination $\Theta$, and the position $D_0$ of the article from the vision system VS, the first controller CTR1 checks the number of the tag attached to the data (Step SB4).

When the number of the tag attached to the data is "2" or "3", the first controller CTR1 transfers the received data of the center coordinates $(x_0, y_0)$, the inclination $\Theta$, and the position $D_0$ of the article to the second controller CTR2 (Step SB5).

When the number of the tag attached to the data is "0" or "1", the first controller CTR1 determines whether the first hand unit HND1 of the first robot R1 is adsorbing the article (Step SB6).

When the first hand unit HND1 is not adsorbing any articles, the first controller CTR1 operates the first robot R1 such that the position of the first hand unit HND1 is disposed in accordance with the center coordinates $(x_0, yo, z_0)$ and the inclination $\Theta$ of the article (Step SB9) .

Thereafter, the first controller CTR1 causes the first hand unit HND1 to adsorb the article, thereafter raises the first hand unit HND1 (Step SB10), and adds 1 to N (Step SB11).

When it is determined at Step SB6 that the first hand unit HND1 is adsorbing the article, the first controller CTR1 operates the first robot R1 such that the position of the second hand unit HND2 is disposed in accordance with the center coordinates $(x_0, y_0)$ and the inclination $\Theta$ of the article (Step SB7).

Thereafter, the first controller CTR1 causes the second hand unit HND2 to adsorb the article, thereafter raises the second hand unit HND2 (Step SB8), and adds 1 to N (Step SB11).

After Step SB11, the first controller CTR1 determines whether both the first hand unit HND1 and the second hand unit HND2 of the first robot R1 are in the state of adsorbing the article (Step SB11). The first controller CTR1 is capable of determining whether the article is adsorbed, on the basis of, for example, the suction pressures of the adsorption units 500 of the first hand unit HND1 and the second hand unit HND2.

When one of the first hand unit HND1 and the second hand unit HND2 is not in the state of adsorbing the article, the first controller CTR1 returns to Step SB3 and performs processing for the new article.

When both the first hand unit HND1 and the second hand unit HND2 are in the state of adsorbing the article, the first controller CTR1 determines whether the arm form of the first robot R1 is the left arm form or the right arm form (Step SB13).

When the arm form is the left arm form, the first controller CTR1 boxes the articles adsorbed with the first hand unit HND1 and the second hand unit HND2 in the packing box B1 (Step SB15).

When the arm form is the right arm form, the first controller CTR1 boxes the articles adsorbed with the first hand unit HND1 and the second hand unit HND2 in the packing box B2 (Step SB14).

Thereafter, the first controller CTR1 determines whether N is 40 (Step SB16), and changes the arm form of the first robot R1 when it is determined that N is 40 (Step SB17). This explanation illustrates the example in which 40 articles are boxed in each of the packing boxes B1 and B2 and, at Step SB16, the first controller CTR1 determines whether boxing of one of the packing boxes B1 and B2 has been finished.

When it is determined that N is not 40, the first controller CTR1 also determines whether N is 80 (Step SB18). When N is 80, the first robot R1 has finished one operation for each of the left arm form and the right arm form, and boxing of both the packing box B1 and the packing box B2 has been finished.

This explanation illustrates operations performed at the time when 40 articles are boxed in each of the packing box B1 and the packing box B2, but the number of articles to be boxed in each of the packing box B1 and the packing box B2 is not limited to the number described above. For example, the number of articles to be boxed may be different between the packing box B1 and the packing box B2. It suffices that the first controller CTR1 determines at Step SB17 whether N is equal to the number of articles to be boxed in the packing box B1, and determines at Step SB18 that N is equal to the sum of the number of articles to be boxed in the packing box B1 and the number of articles to be boxed in the packing box B2.

When it is determined that N is not 80, the first controller CTR1 returns to Step SB3 and perform processing on a new article. When it is determined that N is 80, the first controller CTR1 determines that one cycle of boxing has been finished, and ends the processing. The first controller CTR1 may repeatedly perform the boxing for a plurality of cycles.

As described above, in the present embodiment, the first controller CTR1 is capable of operating the first hand unit HND1 and the second hand unit HND2 of the first robot R1 to successively adsorb the articles successively conveyed with the belt conveyor 40. This structure enables reduction in movement distance of the arm to move the second hand unit HND2 to the position of the next article after the article is adsorbed with the first hand unit HND1, and enables increase in conveyance speed of the belt conveyor 40.

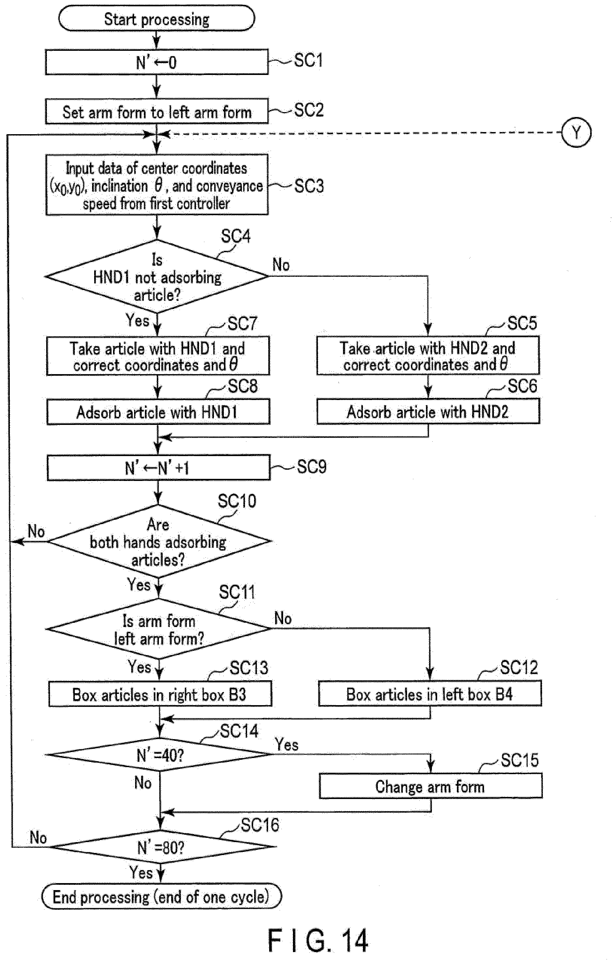

FIG. 14 is a flowchart for explaining an example of operations of the second controller of the article boxing system according to the second embodiment.

When processing is started, first, the second controller CTR2 sets N' to 0 (Step SC1), and sets the arm form of the second robot R2 as a left arm form (Step SC2).

The second controller CTR2 waits for data from the first controller CTR1. When the second controller CTR2 receives data of the center coordinates $(x_0, y_0)$, the inclination $\Theta$, and the conveyance speed from the first controller CTR1 (Step SC3), the second controller CTR2 determines whether the first hand unit HND1 of the second robot R2 is adsorbing the article (Step SC4).

When the first hand unit HND1 is not adsorbing any articles, the second controller CTR2 operates the second robot R2 such that the position of the first hand unit HND1 is disposed in accordance with the center co-ordinates $(x_0, yo, z_0)$ and the inclination $\Theta$ of the article (Step SC7).

Thereafter, the second controller CTR2 causes the first hand unit HND1 to adsorb the article, thereafter raises the first hand unit HND1 (Step SC8), and adds 1 to N' (Step SC9).

When it is determined at Step SC4 that the first hand unit HND1 is adsorbing the article, the second controller CTR2 operates the second robot R2 such that the position of the second hand unit HND2 is disposed in accordance with the center coordinates $(x_0, y_0, z_0)$ and the inclination $\Theta$ of the article (Step SC5).

Thereafter, the second controller CTR2 causes the second hand unit HND2 to adsorb the article, thereafter raises the second hand unit HND2 (Step SC6), and adds 1 to N' (Step SC9).

After Step SC9, the second controller CTR2 determines whether both the first hand unit HND1 and the second hand unit HND2 of the second robot R2 are in the state of adsorbing the article (Step SC10). The second controller CTR2 is capable of determining whether the article is adsorbed, on the basis of, for example, the suction pressures of the adsorption units 500 of the first hand unit HND1 and the second hand unit HND2.

When one of the first hand unit HND1 and the second hand unit HND2 is not in the state of adsorbing the article, the second controller CTR2 returns to Step SB3 and performs processing for the new article.

When both the first hand unit HND1 and the second hand unit HND2 are in the state of adsorbing the article, the second controller CTR2 determines whether the arm form of the second robot R2 is the left arm form or the right arm form (Step SC11).

When the arm form is the left arm form, the second controller CTR2 boxes the articles adsorbed with the first hand unit HND1 and the second hand unit HND2 in the packing box B3 (Step SC13).

When the arm form is the right arm form, the second controller CTR2 boxes the articles adsorbed with the first hand unit HND1 and the second hand unit HND2 in the packing box B4 (Step SC12).

Thereafter, the second controller CTR2 determines whether N is 40 (Step SC14), and changes the arm form of the second robot R2 when it is determined that N is 40 (Step SC15). This explanation illustrates the example in which 40 articles are boxed in each of the packing boxes B3 and B4 and, at Step SC14, the second controller CTR2 determines whether boxing of one of the packing boxes B3 and B4 has been finished.

When it is determined that N is not 40, the second controller CTR2 also determines whether N is 80 (Step SC16). When N is 80, the second robot R2 has finished one operation for each of the left arm form and the right arm form, and boxing of both the packing box B3 and the packing box B4 has been finished. When it is determined that N is not 80, the second controller CTR2 returns to Step SB3 and perform processing on a new article. When it is determined that N is 80, the second controller CTR2 determines that one cycle of boxing has been finished, and ends the processing. The second controller CTR2 may repeatedly perform the boxing for a plurality of cycles.

In the same manner as the first controller CTR1, the second controller CTR2 is capable of operating the first hand unit HND1 and the second hand unit HND2 of the second robot R2 to successively adsorb the articles successively conveyed with the belt conveyor 40. This structure enables reduction in movement distance of the arm to move the second hand unit HND2 to the position of the next article after the article is adsorbed with the first hand unit HND1, and enables increase in conveyance speed of the belt conveyor 40.

As described above, the article boxing system according to the present embodiment is capable of successively holding articles conveyed with the belt conveyor 40 in accordance with the positions and the inclinations thereof, and boxing the articles in packing boxes.

Specifically, the present embodiment provides an article boxing system quickly boxing articles conveyed with a belt conveyor.

(Third Embodiment)

The following is a detailed explanation of a configuration example of an article boxing system according to a third embodiment with reference to drawings.

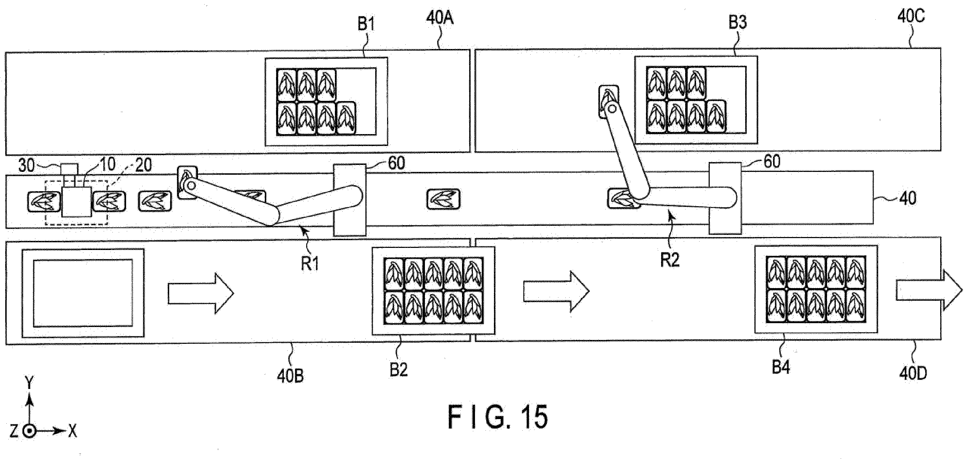

FIG. 15 is a diagram schematically illustrating a configuration example of an article boxing system according to the third embodiment. The article boxing system according to the present embodiment further includes belt conveyors 40A, 40B, 40C, and 40D conveying packing boxes B1 to B4.

The conveyance direction of the belt conveyors 40A to 40D are substantially parallel with the conveyance direction (x direction) of the belt conveyor 40 conveying articles. The belt conveyor 40 is disposed, in the y direction, between the belt conveyor 40A and the belt conveyor 40B, and between the belt conveyor 40C and the belt conveyor 40D.

The first robot R1 and the second robot R2 are arranged on the belt conveyor 40, with each of the front surfaces facing the upstream side (or downstream side) of the belt conveyor 40. For this reason, in the present embodiment, the positional relation between each of the robots and the article at the time when the first robot R1 and the second robot R2 adsorb the articles is different from the first embodiment and the second embodiment described above. The first controller CTR1 and the second controller CTR2 control operations of the arms such that the first robot R1 and the second robot R2 adsorb articles conveyed from the upstream side of the belt conveyor 40 toward the robot itself with their hand units.

In addition, in the present embodiment, the orientation of the longitudinal sides of the articles when the articles are supplied onto the belt conveyor 40 is different by 90° from the orientation of the longitudinal sides of the articles when they are boxed in the packing boxes B1 to B4. For this reason, the first controller CTR1 and the second controller CTR2 cause the first robot R1 and the second robot R2 to adsorb the articles in the same manner as the first embodiment and the second embodiment described above, and thereafter rotate the respective shafts SFT of the hand adjustment units 50 by substantially 90° to box the articles in predetermined positions in the packing boxes B1 to B4.

In the present embodiment, for example, the first robot R1 boxes articles in the packing box B1 first, and the second robot R2 boxes articles in the packing box B3 first. Thereafter, when boxing of both the packing box B1 and the packing box B3 is finished, the packing box B1 and the packing box B3 are conveyed in the downstream direction with the belt conveyor 40A and the belt conveyor 40C, and simultaneously empty packing boxes B1 and B3 are supplied from the upstream section. During this operation, the first robot R1 and the second robot R2 can perform the work of boxing articles in the packing boxes B2 and B4. Thereafter, when boxing of both the packing box B2 and the packing box B4 is finished, the packing box B2 and the packing box B4 are conveyed in the downstream direction with the belt conveyor 40B and the belt conveyor 40D, and simultaneously empty packing boxes B2 and B4 are supplied from the upstream section. Repeating the operations described above enables smooth execution of the work of exchanging the packing boxes for which boxing has been finished with empty packing boxes, and enables quick boxing of articles conveyed with the belt conveyor.

As described above, the article boxing system according to the present embodiment is capable of successively holding articles conveyed with the belt conveyor 40 in accordance with the positions and the inclinations thereof, and boxing the articles in packing boxes.

Specifically, the present embodiment provides an article boxing system quickly boxing articles conveyed with a belt conveyor.

The present invention is not limited to the embodiments described above, but can be carried out with the constituent elements modified within the range not departing from the gist of the invention. Various inventions can be made by proper combinations of constituent elements disclosed in the embodiments described above. For example, some constituent elements may be deleted from the constituent elements disclosed in the embodiments. As another example, constituent elements of the different embodiments may be used in proper combinations.

Some embodiments of the present invention have been described above, but these embodiments have been presented as examples, and are not intended to limit the scope of the invention. The novel embodiments may be carried out in other various forms, and various omissions, replacement, and changes are possible within the range not departing from the gist of the invention. These embodiments and modifications thereof are included in the scope and the gist of the invention, and included in the inventions described in the claims and equivalent ranges thereof.

REFERENCE SIGNS LIST

10... Image processing apparatus, 20... Illumination apparatus, 30... Conveyance speed detector, 40, 40A, 40B... Belt conveyor, 40A, 50... Hand adjustment unit, 500... Adsorption unit, A1... First arm, A2... Second arm, AX1... First shaft, AX2... Second shaft, AX3... Third shaft, AX4... Fourth shaft, B1 to B4... Packing box, CTR1... First controller (master), CTR2... Second controller (slave), HND... Hand unit, HND1... First hand unit, HND2... Second hand unit, R1... First robot, R2... Second robot

**Claims**

1. An article boxing system comprising:

    an image processing apparatus detecting edges of an article on the basis of an image of the article captured with a camera, and calculating information relating to a conveyance state of the article;
    a first robot including a hand unit holding the article by adsorbing the article, and an arm adjusting three-dimensional coordinates of the hand unit and an inclination of the hand unit with respect to a conveyance direction; and
    a first controller acquiring the information relating to the conveyance state of the article from the image processing apparatus, acquiring conveyance speed at which the article is conveyed, calculating position coordinates of the article, and, when the article reaches an operation range of the first robot, controlling an operation of the arm of the first robot to move the hand unit in correspondence with the information relating to the conveyance state of the article and cause the hand unit to adsorb the article.

2. The article boxing system according to claim 1, wherein the information relating to the conveyance state of the article includes at least one of center coordinates of the article, an inclination of the article with respect to the conveyance direction, and a position of the article.

3. The article boxing system according to claim 1, wherein the image processing apparatus detects a packed state of the article on the basis of the image.

4. The article boxing system according to claim 1, wherein the hand unit includes at least one adsorption unit including a holding member brought into contact with the article with a space between the holding member and the article, and the adsorption unit adsorbing the article by suction of air in the space.

5. The article boxing system according to claim 4, wherein the hand unit includes a support plate including an end portion disposed in a position facing longitudinal edges of the article, with a space between the end portion and the longitudinal edges of the article, when the adsorption unit adsorbs the article.

6. The article boxing system according to claim 1, wherein

    the first robot further includes a second hand unit holding the article by adsorbing the article, three-dimensional coordinates and an inclination in the conveyance direction of the second hand unit are adjusted with the arm, and
    the first controller acquires the information relating to the conveyance state of the article from the image processing apparatus, acquires the conveyance speed at which the article is conveyed, calculates the position coordinates of the article, and, when the article reaches the operation range of the first robot, controls an operation of the arm of the first robot to move the hand unit or the second hand unit in correspondence with the information relating to the conveyance state of the article and cause the hand unit or the second hand unit to adsorb the article.

7. The article boxing system according to claim 6, wherein
    the second hand unit includes at least one adsorption unit including a holding member brought into contact with the article with a space between the holding member and the article, the adsorption unit adsorbing the article by suction of air in the space, and
    the hand unit and the second hand unit are different in position of the holding member in a height direction.

8. The article boxing system according to claim 1, further comprising:

a second robot including the hand unit and the arm adjusting the three-dimensional coordinates of the hand unit and the inclination of the hand unit with respect to the conveyance direction; and

a second controller controlling an operation of the arm of the second robot, wherein

the image processing apparatus provides a tag to data of the information relating to the conveyance state of the article, and supplies the data to the first controller,

the first controller transfers the received data to the second controller in accordance with a value of the tag, and

the second controller acquires the information relating to the conveyance state of the article and the conveyance speed from the first controller, calculates the position coordinates of the article, and, when the article reaches an operation range of the second robot, controlling the operation of the arm of the second robot to move the hand unit in correspondence with the information relating to the conveyance state of the article and cause the hand unit to adsorb the article.

F I G. 1

F I G. 2

F I G. 3

FIG.4

(A)          (B)          (C)          (D)

F I G. 5

EP 4 043 162 A1

HND

HND

500

500

SP

500

SP

SP

F I G. 6

F I G. 7

EP 4 043 162 A1

FIG. 8

EP 4 043 162 A1

First stage $(x_A, y_A)$

| | |
|---|---|
| 10 | 9 |
| 8 | 7 |
| 6 | 5 |
| 4 | 3 |
| 2 | 1 |

Second stage $(x_A, y_A)$

| | |
|---|---|
| 20 | 19 |
| 18 | 17 |
| 16 | 15 |
| 14 | 13 |
| 12 | 11 |

Third stage $(x_A, y_A)$

| | |
|---|---|
| 30 | 29 |
| 28 | 27 |
| 26 | 25 |
| 24 | 23 |
| 22 | 21 |

Fourth stage $(x_A, y_A)$

| | |
|---|---|
| 40 | 39 |
| 38 | 37 |
| 36 | 35 |
| 34 | 33 |
| 32 | 31 |

F I G. 9

FIG. 10

F I G. 11

Start processing

T←0 — SA1

SA2

Input camera image

SA3

Image processing

SA4

Has package been peeled off? — No

Yes

SA5

Is label abnormal? — No

Yes

Digitize center coordinates $(x_0, y_0)$ and inclination $\theta$ — SA6

SA7

T=0? — No

Yes — SA11

Provide tag "0" to data

T←1

SA12

SA8

T=1? — No

Yes — SA13

Provide tag "1" to data

T←2

SA14

SA9

T=2? — No

Yes — SA15

Provide tag "2" to data

T←3

SA16

SA10

T=3?

Yes — SA17

Provide tag "3" to data

T←0

SA18

Transfer data to first controller — SA19 --------- (X)

SA20

Is operation continuation flag turned on?

Yes

No

End processing

FIG. 12

```
        ┌─────────────────────┐
        │   Start processing  │
        └──────────┬──────────┘
                   ▼
        ┌─────────────────────┐
        │        N←0          │── SB1
        └──────────┬──────────┘
                   ▼
        ┌─────────────────────┐
        │ Set arm form to left arm form │── SB2
        └──────────┬──────────┘ - - - - - - - - - - - - - - - - ─(X)
                   ▼
        ┌─────────────────────────────┐
        │  Input data of center       │
        │  coordinates (x₀, y₀) and   │── SB3
        │  inclination θ from         │
        │  image processing apparatus │
        └──────────┬──────────────────┘
                   ▼            SB4
               ◇ Has tag ◇  2 or 3
              number of data been ──────────────┐
               checked?                          ▼          SB5
                   │ 0 or 1            ┌──────────────────────────────┐
                   ▼        SB6        │ Transfer data to second      │
               ◇    Is    ◇   No       │ controller                   │── ─(Y)
              HND1 not adsorbing ──────┐ └──────────────────────────────┘
               article?                │
                   │ Yes               │
                   ▼      SB9          ▼      SB7
        ┌─────────────────────┐  ┌─────────────────────┐
        │ Take article with   │  │ Take article with   │
        │ HND1 and correct    │  │ HND2 and correct    │
        │ coordinates and θ   │  │ coordinates and θ   │
        └──────────┬──────────┘  └──────────┬──────────┘
                   ▼    SB10                ▼    SB8
        ┌─────────────────────┐  ┌─────────────────────┐
        │ Adsorb article with │  │ Adsorb article with │
        │ HND1                │  │ HND2                │
        └──────────┬──────────┘  └──────────┬──────────┘
                   ▼◄───────────────────────┘
        ┌─────────────────────┐
        │       N←N+1         │── SB11
        └──────────┬──────────┘
                   ▼      SB12
         No   ◇   Are    ◇
        ◄──── both hands adsorbing
             articles?
                   │ Yes
                   ▼      SB13
               ◇ Is arm form ◇  No
              left arm form? ──────────────┐
                   │ Yes                    ▼
                   ▼    SB15               SB14
        ┌─────────────────────┐  ┌─────────────────────┐
        │ Box articles in     │  │ Box articles in     │
        │ right box B1        │  │ left box B2         │
        └──────────┬──────────┘  └──────────┬──────────┘
                   ▼◄───────────────────────┘
                   ▼    SB16
               ◇  N=40? ◇  Yes            SB17
                   │ No ─────────► ┌──────────────────┐
                   │               │ Change arm form  │
                   │               └────────┬─────────┘
                   ▼◄──────────────────────┘
                   ▼    SB18
         No   ◇  N=80? ◇
        ◄────
                   │ Yes
                   ▼
        ┌──────────────────────────────┐
        │ End processing (end of one   │
        │ cycle)                       │
        └──────────────────────────────┘
```

F I G. 13

Start processing

N' ←0 —SC1

Set arm form to left arm form —SC2

(Y)

Input data of center coordinates $(x_0,y_0)$, inclination $\theta$, and conveyance speed from first controller —SC3

SC4
Is HND1 not adsorbing article? — No

Yes —SC7
Take article with HND1 and correct coordinates and $\theta$

—SC8
Adsorb article with HND1

—SC5
Take article with HND2 and correct coordinates and $\theta$

—SC6
Adsorb article with HND2

N' ←N' +1 —SC9

SC10
Are both hands adsorbing articles? — No

Yes
SC11
Is arm form left arm form? — No

Yes —SC13
Box articles in right box B3

—SC12
Box articles in left box B4

SC14
N' =40? — Yes

—SC15
Change arm form

No

SC16
N' =80? — No

Yes
End processing (end of one cycle)

F I G. 14

F I G. 15

EP 4 043 162 A1

**EP 4 043 162 A1**

**INTERNATIONAL SEARCH REPORT**

| | International application No. |
|---|---|
| | PCT/JP2020/036964 |

**A. CLASSIFICATION OF SUBJECT MATTER**
B25J 13/08(2006.01)i; B25J 15/06(2006.01)i; B65B 5/08(2006.01)i
FI: B25J13/08 A; B25J15/06 A; B25J15/06 D; B65B5/08

According to International Patent Classification (IPC) or to both national classification and IPC

**B. FIELDS SEARCHED**

Minimum documentation searched (classification system followed by classification symbols)
B25J13/08; B25J15/06; B65B5/08

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2015-214012 A (FANUC CORPORATION) 03 December 2015 (2015-12-03) paragraphs [0014]-[0120], fig. 1-29(c) | 1–8 |
| Y | JP 2018-140794 A (KAWASAKI HEAVY INDUSTRIES, LTD.) 13 September 2018 (2018-09-13) paragraphs [0016]-[0096], fig. 1-12 | 1–8 |
| Y | JP 2002-113678 A (SEIKO INSTRUMENTS INC.) 16 April 2002 (2002-04-16) paragraphs [0010]-[0035], fig. 1-4 | 1–8 |
| Y | JP 2004-010130 A (NITTETSU HOKKAIDO CONTROL SYSTEMS CORP.) 15 January 2004 (2004-01-15) paragraph [0013], fig. 1-3 | 3 |
| Y | JP 2018-144225 A (NISSHIN SEIFUN GROUP INC.) 20 September 2018 (2018-09-20) paragraphs [0017]-[0025], fig. 1-5 | 5 |

☒ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 December 2020 (01.12.2020) | 08 December 2020 (08.12.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/036964

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2016-060013 A (ISHIDA CO., LTD.) 25 April 2016 (2016-04-25) paragraph [0054], fig. 9 | 6-7 |
| Y | JP 09-131683 A (FANUC CORPORATION) 20 May 1997 (1997-05-20) paragraphs [0049], [0067], [0114]-[0126], fig. 2, 9 | 8 |

Form PCT/ISA/210 (continuation of second sheet) (January 2015)

**INTERNATIONAL SEARCH REPORT**
Information on patent family members

| International application No. |
|---|
| PCT/JP2020/036964 |

| Patent Documents referred in the Report | Publication Date | Patent Family | Publication Date |
|---|---|---|---|
| JP 2015-214012 A | 03 Dec. 2015 | US 2015/0246778 A1<br>paragraphs [0015]-[0168], fig. 1-29C<br>DE 102015102740 A1<br>CN 104876021 A<br>JP 2016-026899 A<br>JP 5824173 B1 | |
| JP 2018-140794 A | 13 Sep. 2018 | US 2019/0375521 A1<br>paragraphs [0016]-[0110], fig. 1-12<br>WO 2018/155690 A1<br>CN 110603197 A<br>KR 10-2020-0002804 A | |
| JP 2002-113678 A | 16 Apr. 2002 | (Family: none) | |
| JP 2004-010130 A | 15 Jan. 2004 | (Family: none) | |
| JP 2018-144225 A | 20 Sep. 2018 | (Family: none) | |
| JP 2016-060013 A | 25 Apr. 2016 | (Family: none) | |
| JP 09-131683 A | 20 May 1997 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6191507 B